# EUROPEAN PATENT APPLICATION

(11) **EP 2 253 761 A2**
(43) Date of publication of application: **24.11.2010**
(21) Application number: 10162673.7
(22) Date of filing: 12.05.2010
(51) Int. Cl.: E01C 13/02

(54) **Method and screw for jointing of two membrane plates**

(30) Priority: 13.05.2009 NO 20091868
(71) Applicant: Oldroyd Cheetham, John, 3770 Kragerø (NO)
(72) Inventor: Oldroyd Cheetham, John, 3770 Kragerø (NO)
(74) Representative: Søndersrød, Gunnar Nilsen

(57) **Abstract**

The invention relates to a method and a screw (14) joining adjacent, preferably watertight membrane elements (10), intended for covering surfaces such as the underlay for a sports arena, a building construction or the inside surface of a cavity for example in rock, where the previously mentioned edges (23) are preferably formed with complementary arrangements for establishing a joint and where an initial length is laid or fastened and thereafter another length is laid to overlap the edge of the first length.

According to the invention suitable screws (14) are then screwed down at suitable places along the overlapping joint, through the upper membrane edge (23) and thereafter down through the underlying membrane edge (23), the screw (14) being provided with a conical body (17) and threads (18) stretching widely in a lateral direction and having a large pitch round the conical body (17) of the screw (14).

## Description

### The Technical Field of the invention

The present invention relates to a method and arrangement for jointing membranes used, for example, as underlay for sports arenas, in building constructions or as an internal lining for tunnel walls and roofs or the like.

### Background

In connection with constructions or sites such as sports arenas, the internal lining of tunnel roofs and walls or in building foundation work there is frequently a need to apply a more or less watertight membrane to hinder the ingress of water. It is known, for example, that in railway or tram tunnels it is necessary to protect the track from water continuously dripping on to it, causing damage and breakage of the track which can then result in derailing and its dangerous consequences.

In connection with sports arenas or large areas where there is a need to avoid water, for example in the form of rain or melting snow entering the underlying ground in an uncontrolled fashion but instead be led away quickly and effectively sideways out of the arena.

For this reason it has previously been suggested to lay a membrane in the form of a watertight foil or sheet onto a more or less leveled, horizontal underlay which can be used as a sports arena. Such foil or sheet, being available in units which must be jointed, is laid in an overlapping pattern and connected with profiles forming drainage channels.

Furthermore it is known to clad roof and walls of tunnels with a watertight membrane mounted in sections stretching up the wall, under the roof and down again on the opposite side. Such sections are also applied in an overlapping pattern so that water coming from above meets the membrane and is then allowed to run down along this without entering the tunnel opening underneath.

From the applicants own application PCT/N02008/000443 a system is known for the draining of water from an arena such as a paddock, a sand volleyball court, a football field or the like where a watertight barrier in the form of, for example, a watertight sheet or foil of plastic material is laid on the underlying ground. This application is therefore included by the reference with respect to the design of the connection between the sheets or foils formed the membrane and its fastening to the adjacent channel and/or edge boundary system.

The applicants own patent application nr. NO 200990521, which hereby is included by the reference with respect to possible designs of the sheet or membrane, relates to variants of a watertight membrane intended to cover a building construction, a surface or to lie on or against a building construction, a surface, floor, internal roof and/or wall lining. The membrane comprises a thin and watertight sheet or foil formed material designed to lead water along one of its surfaces and which, on at least one side is equipped with outward facing studs and/or fins. Furthermore the membrane is formed, on at least one edge, with a jointing connection preferably stretching the length of the membrane. This jointing connection is designed to work together with at least one similar jointing connection on an adjacent sheet or foil formed membrane thus ensuring the correct alignment of the membrane sheets in relation to each other.

Since the area to be covered is usually considerably longer or wider than the available foil or sheet the foil or sheets must be jointed. There is therefore a need for a quick and effective method of joining sheets more or less continuously and preferably in a watertight fashion which at the same time ensures that the elements cannot move in relation to each other during and after laying.

### Summary of the invention.

One object of the solution according to the invention is to provide a rational method of forming a stable and preferably watertight joint which can be made under damp and/or bad weather conditions without necessarily being dependent on the absence of running or dripping water in order to establish a preferably tight and proper joint of this type.

Another object of the solution according to the invention is establish a method of ensuring a stable joint between two adjacent sheets or foils during and after laying which at the same time also provides a completely or for all practical purposes a completely watertight joint.

Another objective of the solution according to the invention is to provide a screw which also is suitable for ensuring a stable positioning of two adjacent sheets or membranes during welding or to hold together glued joints during at least the curing phase.

A further object of the solution according to the invention is to provide a simple solution which can be achieved by simple means and which may be achieved in a simple manner.

Another object of the solution according to the invention is to simplify the jointing process and that screw joints are used, securing that the screws cannot easily be pulled out axially from the screw holes and which do not require a pre-drilled hole in order to be screwed in and through the membrane and/or connecting joint.

Another object of the solution according to the invention is to provide a simple, quick and effective way of establishing a watertight, self-locking connection between two, screwed together, thin plastic membranes whilst other characteristics are preserved such as, for example, the simplified method of laying the membrane and jointing elements and at the same time having low weight, easy to handle.

The object are achieved through a method and arrangement further described in the independent patent claims. Possible embodiments of the solution are defined in the dependent patent claims.

According to the invention specially designed screws are screwed at suitable places along the overlapping joint down through the upper membrane and thereafter through the underlying membrane edge. The screw, having a conical centre, wide threads and a high pitch along the conical centre squeezes the two elements together and locks itself when fully tightened.

A sealing tape or similar can preferably be placed along the joint of the two overlapping sheets or foils, said screws are also being screwed through this tape.

The screws can be screwed through the sheets or foil at elevated positions along the sheets or foil and/or the screws may be provided with a sealing washer between the screw head and the upper sheet and/or foil.

According to one embodiment the screw is used having threads which stop at a distance from the head of the screw, the threads being provided with a large width and having a high pitch. The threads may at the end being positioned near the screw head be terminated by means of a plane surface lying in a vertical radial plane of the screw. This part of the screw may preferably in the region of the screw head be without threads, but may preferably have a cylindrical stem.

According to one embodiment the cylindrical stem of the screw may have a length equivalent to the thickness of the sheets or foils to be screwed together so that the sheets or foils when screwed together lie between the top of the threads and the screw head. Furthermore the distance between two thread surfaces at every position along the helical part of the screw may correspond to the thickness of the sheets or foils to be jointed.

With a solution according to the present invention a simple and effective method is achieved for covering a surface with for example a watertight membrane. The method is not dependent on dry conditions but can be carried out in rain, dripping or running water.

Furthermore the solution ensures a good clamping and locking together of the two overlapping edges of such membranes.

The present invention is especially suitable for the joining of sheets or membranes in connection with underlying membranes in sports arenas or internal water protection surfaces in tunnels, especially but not exclusively in railway tunnels. The system is also suitable for joining membranes employed as the watertight layer on green roofs such as turf roofs, membranes used in connection with waste disposal tips and reservoirs either under or over such areas and for membranes for keeping gasses such as radon out of a building construction and the like.

*Short Description of the Drawings.*

The invention will now be explained in further details with reference to the drawings where:
Figure 1 shows schematically an overlapping joint between two adjacent membranes fastened together by means of screws;
Figure 2 shows schematically a vertical section through a joint;
Figure 3 shows schematically a vertical view of an embodiment of a screw according to the invention;
Figure 4 shows a view of the screw shown in Figure 3 seen from above;
Figure 5 shows schematically a view of the screw shown in Figure 3 seen from the opposite end to that shown in Figure 4;
Figure 6 shows schematically a view of the the screw shown in Figure 3 where the screw is turned 90° in relation to the position shown in Figure 3;
Figure 7 shows a vertical section through the screw shown in Figure 6, seen along the line P-P;
Figures 8a and 8b show a view from above and a section through two adjoining sheets corresponding to the view shown in Fgure 8a, fastened together with a screw according to the invention;
Figures 9a and 9b show a view of a variant seen from above and a section through two adjoining sheets corresponding to the view shown in Figure 9a, fastened together with a screw according to the invention;
Figures 10a and 10b show a view of a further variant seen from above and a section through two adjoining sheets corresponding to the view shown in Figure 10a, fastened together with a screw according to the invention;
Figures 11 a and 11 b show another variant seen from above and a section through two adjoining sheets corresponding to the view shown in Figure 11 a, fastened together with a screw according to the invention; and
Figures 12a and 12b show a view of yet another variant seen from above and a section through two adjoining sheets corresponding to the view shown in Figure 12a, fastened together with a screw according to the invention.

### Detailed Description of the Invention.

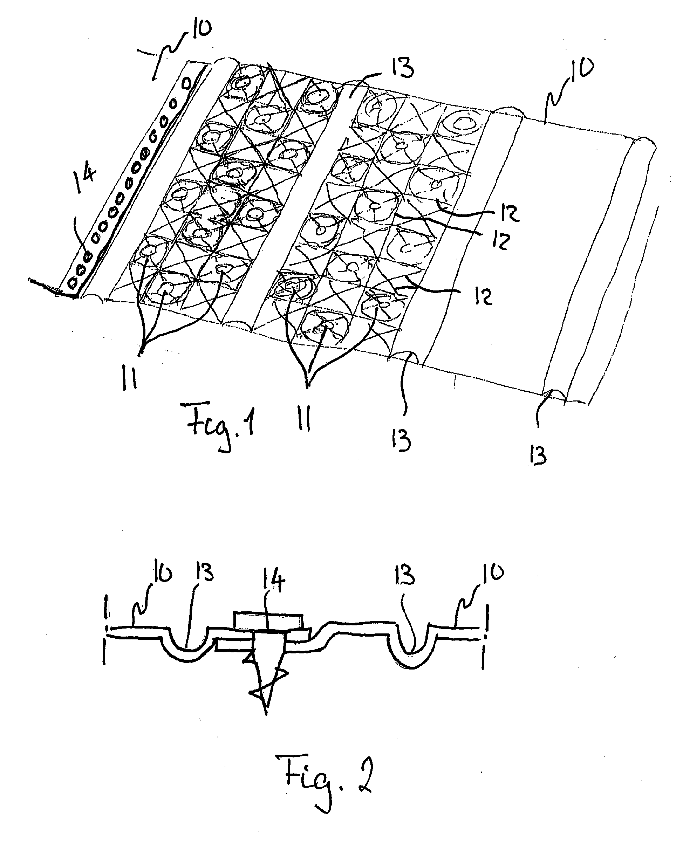

Figure 1 shows schematically two sheets or membranes 10 which are arranged in an overlapping pattern on an underlay. The underlay can be a leveled area for a sports arena, or it can, for example, be the wall and roof area in a tunnel. Membrane 10 is formed with studs 11 and grooves 12 in a lengthwise, lateral and diagonal pattern. Furthermore the membrane is formed with raised areas or channels 13. The channels 13 can be used to drain away collected water which trickles down onto the membrane and runs sideways on it towards these channels 13.

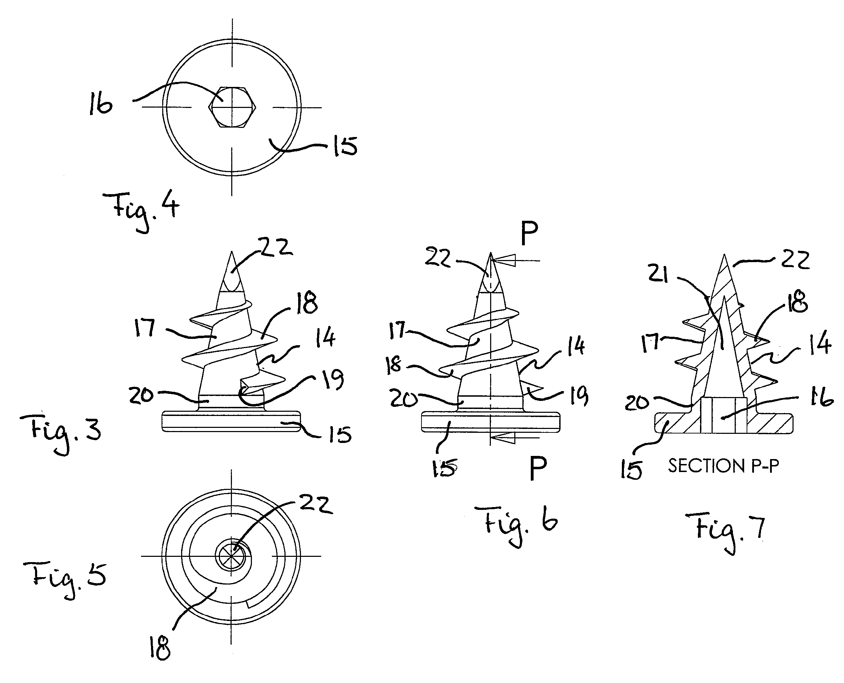

Along an edge sheets are fastened together by means of a row of screws 14. The screws will be described later with reference to Figures 3-7. In this connection it should mentioned that the number of screws used for this purpose can be few or many depending on the properties the joint shall have. Also the distance between screws will, in the same way, vary.

Figure 2 shows a vertical section through the overlapping of two adjacent membrane edges 10 where a screw 14 according to the invention is screwed through the membranes 10 edges and clamping and locking these ends together.

Figure 3 shows schematically a view of the screw 14 in accordance with the invention. The screw 14 comprises a head 15 provided with recesses 16 or projections, such as a hexagonal hole 16 or projection, constructed to be used together with a corresponding tool to provide the rotational force necessary to screw the screw 14 in and through the sheet(s) 10. The opposite end of the screw has a sharp point 22 capable of making a hole in the sheet(s) in the initial screwing phase. Furthermore the screw 14 is formed with a conical body 17. At the end of this conical body 17 nearest the head 15 the conical shape changes to straight cylindrical portion 20. The height of this straight cylindrical portion 20 corresponds to the cumulate thickness of the two membranes to be joined.

Helical threads 18 wind round the conical body 17. The end of the helical threads 18 lying at the pointed end 22 of the screw run continuously from the start whilst thread 18 at the other end, the end nearest the head, stop suddenly in a surface 19. The pitch of the threads is preferably such that the distance between two adjacent thread surfaces is at least as great as the cumulate thickness of the sheets 10 which are to be screwed together. The surface 19 of the sharply ending of the thread 18 lies at the transition point changing from the conical 17 to the cylindrical part of the body 20. The orientation of the surface 19 coincides with a radial lengthwise plane through the axis of the screw. Furthermore the edge of the threads is sharp so that these cut through the plastic membrane and force the material round the hole sideways and downwards towards the point of the screw so that material collects and thereby helps to stop the screw from unscrewing itself. This displaced material also contributes improvement of sealing against the core of the screw.

It should also be mentioned that the surface 19 will lie against displaced material helping to lock the screw against unintentional unscrewing.

Figure 4 shows a plan view of the screw 14 shown in Figure 3, where a hexagonal sided hole 16 is shown in the head 15 intended to take a hexagonal key (not shown).

Figure 5 shows schematically a view of the screw 14 shown in Figure 3, seen from the opposite side in relation to the view shown in Figure 4. As indicated in the Figure the point 22 is given a pointed pyramid shape having sharp, cutting edges.

Figure 6 shows schematically a view of the screw 14 shown in Figure 3 where the screw 14 is turned 90° in relation to its position in Figure 3 allowing orientation and the position of the surface 19 of the sharp ending of the threads 18 to be shown.

Figure 7 shows a vertical section through the screw 14 seen along the line P-P in Figure 6. As shown in the Figure the screw is provided with a hollow portion 21 forming an extension to the hexagonal sided hole 16.

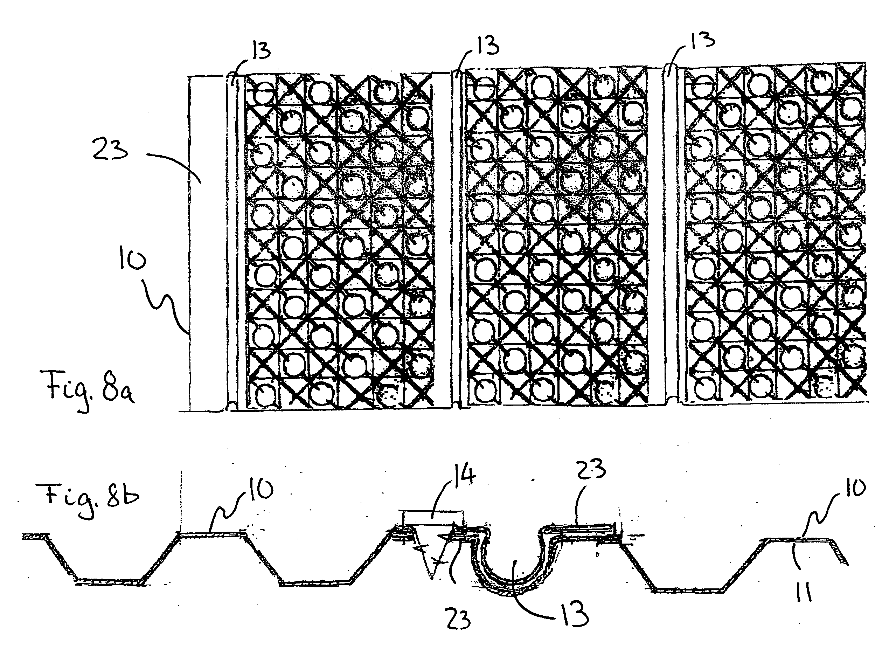

Figures 8 - 12 show variations of the membrane sheets 10 both as a view from above and a section through two adjacent sheets 10 fastened together with a screw 14 according to the invention.

Figure 8a shows a sheet with an end flange 23 where two channels 13 in connection with the end flange 23 lie in each other and where the screw 14 is driven through the highest point of the sheets. Figure 8b shows a section through two adjacent sheets 10 fastened together with screws 14 according to the invention.

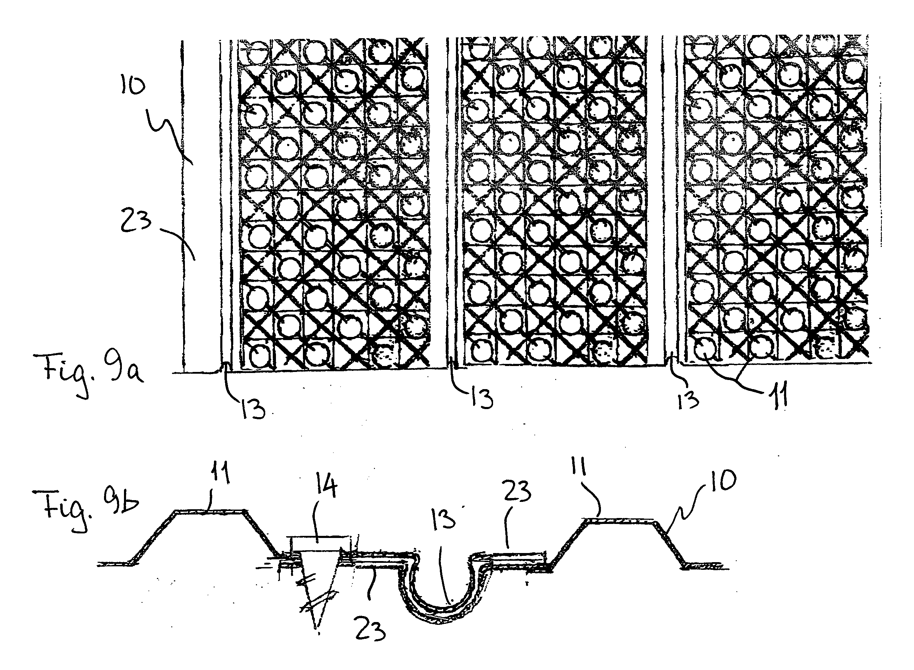

Figures 9a and 9b show correspondingly a variant seen from above and a section through two adjoining sheets 10 like that shown in Figure 9a, screwed together with screws 14 according to the invention. In this variant the sheets are formed with a downward facing channel 23 whilst the studs 11 face in the opposite direction to the channel 23.

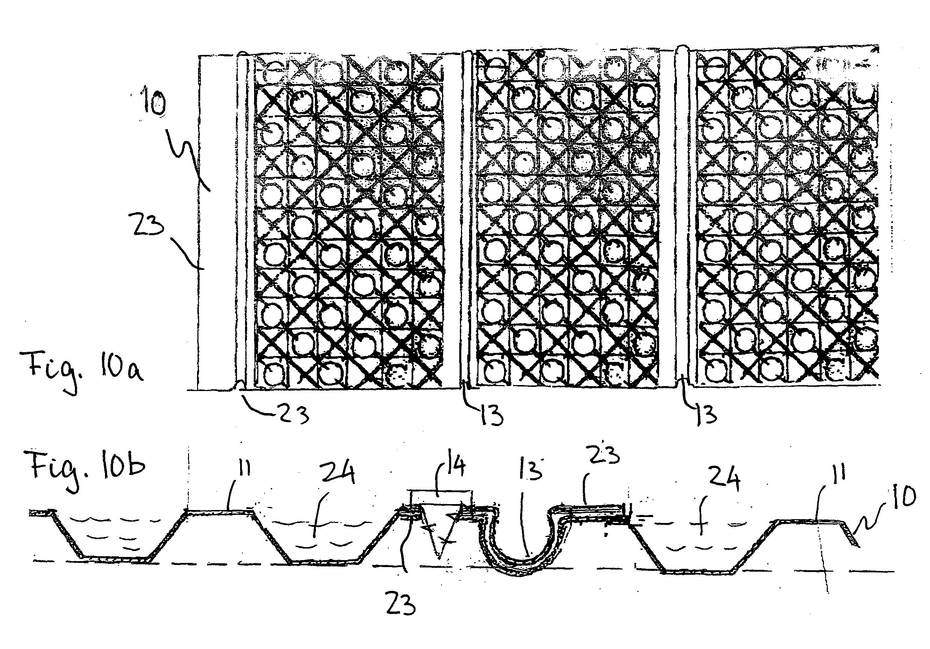

Figures 10a and 10b show correspondingly a further variant seen from above and a section through two adjacent sheets 10 like that shown in Figure 10a, screwed together with screws 14 according to the invention. According to this variant which in many ways is like that shown in Figure 8 the sheet is formed so that water 24 remains standing on the sheet 10 and first drains away when the water level is higher than the studs 11.

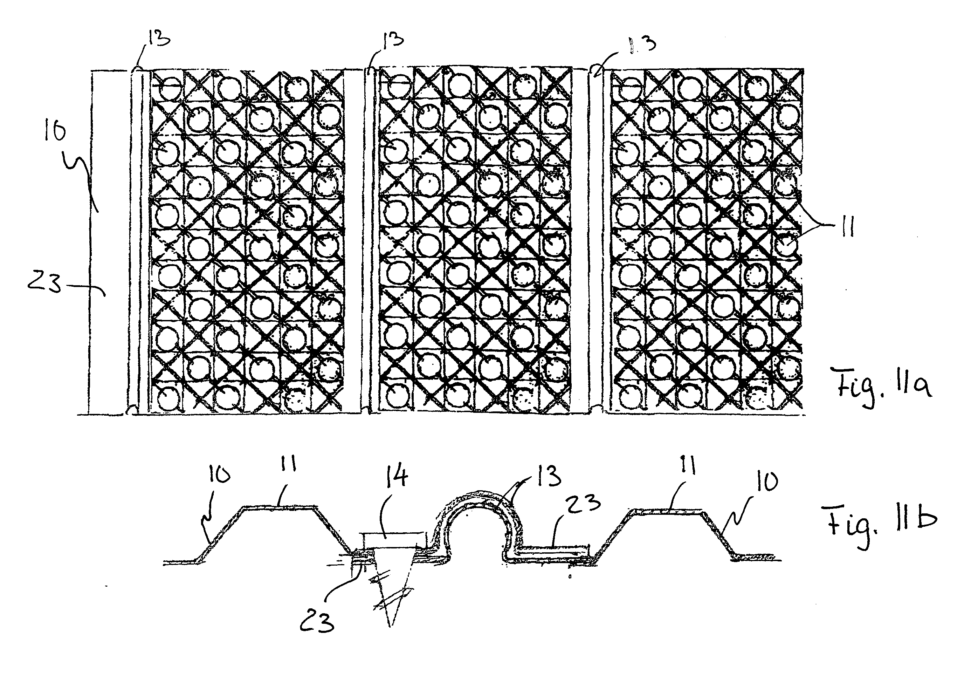

Figures 11a and 11b show yet a further variant seen from above and a section through two adjacent sheets 10 like that shown in Figure 11a, screwed together with screws 14 according to the invention. In this variant the channel 13 and the studs 11 face upwards.

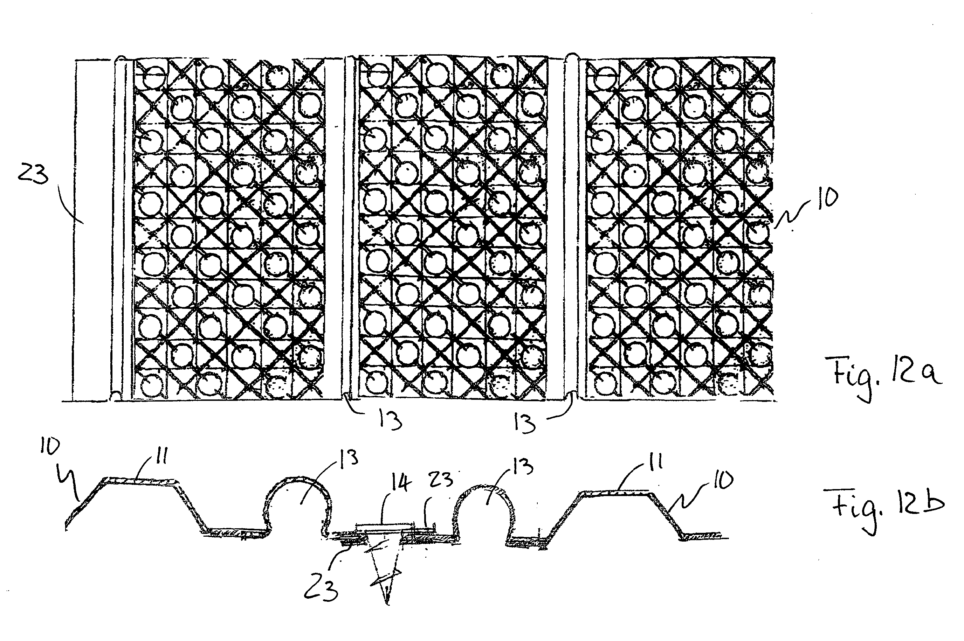

Figures 12a and 12b show a further variant seen from above and a section through two adjacent sheets 10 like that shown in Figure 12a, screwed together with screws 14 according to the invention. According to this variant the ends are so configured as to form together a channel 13 which faces upwards in the same direction as the studs 11.

Even if the screw illustrated has a circular, flat head it should be added that the head can have other forms such as hexagonal or coupled form without departing from the inventive idea. Furthermore, the conical body of the screw 14 can be longer and slimmer. Nor does the solution necessarily have to have a cylindrical portion 20.

## Claims

1. Method of jointing adjacent, preferably watertight membrane elements (10) of plastic material intended to cover areas such as the underlay for a sports arena, a building construction or the internal surface of a cavity, for example in rock, in a watertight fashion, where the jointing is made along the membrane elements edges (23), the said edges (23) preferably being formed so as to work together to establish a joint and which when laid are made without holes or openings for jointing since a first length is laid or fastened thereafter an adjacent length is laid with its edge in an overlapping position on the edge of the said first length and where the overlapping edges are locked together at suitable places along the length of the joint by means of screws which are screwed through both the upper and lower edges (23);
**characterized by** the said screws (14) are used to make holes in the two overlapping edges and that the screws (14) which having a conical centre, when screwed in through said overlapping edges gradually expand the said hole during screwing in, the screw (14) being screwed so far in that the two overlapping edges are left lying between the head (15) of the screw (14) and a final surface (19) on the screws (14) threads (18), lying in a radial plane coinciding with the screws (14) axis and lying at a distance from the screws (14) head (15).

2. Method according to claim 1, where a sealing tape or similar is placed along the joint between two overlapping sheets (10) or foils and that screws (14) are also screwed through the said sealing tape or similar.

3. Method according to claims 1 or 2, where the screws (14) are screwed through the sheets (10) or foils along raised portions on the sheets (10) or foils.

4. Method according to claims 1 - 3 where the screws (14) are equipped with a packing lying between the underside of the head of the screw (15) and the said upper sheet (10) and /or foil.

5. Screw (14) intended to fasten together two parallel membrane elements (10) each of which is in the form of a foil or sheet of plastic material, consisting of a head (15) provided with a recess or surfaces (16) intended to function together with rotating tool, a core (17) with helical threads (18) which turn round the core (17), said threads (18) stop at a distance from the said head (15) and that the threads have preferably both a large lateral width and a large pitch, and a preferably cylindrical portion (20) lying between the conical core (17) and the head (15),
**characterised in that** the shape of the screw is conical with an increasing diameter towards the head, that the threads have a triangular cross section with a sharp edge and that the threads (18) end in a flat surface (19) which lies in a radial vertical plane in relation to the screw axis.

6. Screw (14) according to claim 5, where the straight surface (19) lies in the area between the screws (14) conical part (17) and the cylindrical portion (20).

7. Screw (14) according to claims 5 or 6, where the threads are formed with sharp cutting edges.

8. Screw (14) according to claim 7, where the cylindrical portion (20) has a height suited to the thickness of the sheets (10) or foils which are to be screwed together so that the said sheets (10) or foils when screwed together lie between the head (15) of the screw (14) and the final end surface (19) of the threads (18).

9. Screw (14) according to the claims 5 - 8 where the distance between two thread surfaces at each place in the helical part of the screw (14) equals the combined thickness of the sheets (10) or foils which are to be jointed.
